Europäisches Patentamt

European Patent Office

Office européen des brevets

(19)

(11) **EP 1 227 877 B1**

(12) **FASCICULE DE BREVET EUROPEEN**

(45) Date de publication et mention
de la délivrance du brevet:
**26.11.2003 Bulletin 2003/48**

(21) Numéro de dépôt: **00960788.8**

(22) Date de dépôt: **04.09.2000**

(51) Int Cl.⁷: **B01F 17/00**

(86) Numéro de dépôt international:
**PCT/FR00/02434**

(87) Numéro de publication internationale:
**WO 01/021297 (29.03.2001 Gazette 2001/13)**

(54) **EMULSION DOUBLE POLYDISPERSE, EMULSION DOUBLE MONODISPERSE CORRESPONDANTE ET PROCEDE DE PREPARATION DE L'EMULSION MONODISPERSE**

POLYDISPERSE DOPPELEMULSION, ZUGEHÖRIGE MONODISPERSE DOPPELEMULSION UND DEREN HERSTELLUNGSVERFAHREN

POLYDISPERSE DOUBLE EMULSION, CORRESPONDING MONODISPERSE DOUBLE EMULSION AND METHOD FOR PREPARING THE MONODISPERSE EMULSION

(84) Etats contractants désignés:
**AT BE CH CY DE DK ES FI FR GB GR IE IT LI LU MC NL PT SE**

(30) Priorité: **20.09.1999 FR 9911745**

(43) Date de publication de la demande:
**07.08.2002 Bulletin 2002/32**

(73) Titulaire: **CENTRE NATIONAL DE LA RECHERCHE SCIENTIFIQUE (CNRS)**
**75016 Paris (FR)**

(72) Inventeurs:
• **Bibette, Jérôme Michel Jacques**
**33000 Bordeaux (FR)**
• **Leal Calderon, Fernando**
**33650 La Brède (FR)**
• **Gorria, Philippe, Appartement 33**
**33700 Mérignac (FR)**

(74) Mandataire: **Jacobson, Claude**
**Cabinet Lavoix**
**2, Place d'Estienne d'Orves**
**75441 Paris Cedex 09 (FR)**

(56) Documents cités:
**WO-A-97/38787          WO-A-99/07463**

EP 1 227 877 B1

## Description

L'invention concerne une émulsion double stable, monodisperse de type eau dans huile dans eau, son procédé de préparation ainsi que l'émulsion double, stable polydisperse, utilisée comme émulsion de départ dans le procédé de préparation.

L'intérêt des émulsions doubles est largement reconnu dans des domaines aussi divers que les domaines pharmaceutiques, cosmétiques, phytosanitaires, alimentaires et/ou des revêtements de type peintures.

Les émulsions doubles de type eau dans huile dans eau permettent notamment l'encapsulation de substances actives variées au niveau de la phase aqueuse interne. Dans des conditions bien déterminées, il est en effet possible de provoquer le relargage des substances actives, encapsulées tout en contrôlant leur cinétique de libération.

La préparation d'émulsions doubles stables de type eau dans huile dans eau comprenant dans leur phase aqueuse interne une substance active est problématique. La mise au point de telles émulsions est généralement réalisée par tâtonnement sur la base de régles empiriques en fonction des constituants en présence dans les différentes phases. Dans la technique, les émulsions doubles monodisperses sont particulièrement recherchées du fait de leur homogénéité : elles permettent notamment un relargage régulier des matières actives.

On connaît différents procédés de préparation d'émulsions monodisperses : un premier procédé est celui décrit dans EP-A-442 831 et EP-A-517 987. Ce procédé implique le fractionnement d'une émulsion primaire de départ, polydisperse, par crémages successifs. Il est long et fastidieux et pas facilement applicable à une échelle industrielle. Un second procédé est décrit dans FR-A-97 00 690. Il consiste à soumettre une émulsion primaire de départ viscoélastique, à un cisaillement contrôlé de telle sorte qu'un même cisaillement maximal soit appliqué à l'ensemble de l'émulsion. Ce procédé présente différents avantages et notamment permet un contrôle de la taille des gouttelettes de l'émulsion monodisperse obtenue.

Lorsqu'on applique l'un ou l'autre de ces procédés à une émulsion double, il est essentiel de ne pas induire la destruction de l'émulsion double, en provoquant par exemple la coalescence des gouttelettes formant l'émulsion ou la fuite prématurée du principe actif.

Dans ces conditions, on comprend que la mise au point d'une émulsion double de type eau dans huile dans eau qui soit à la fois stable et fractionnable soit des plus délicates. Il doit être entendu que dans le cadre de l'invention, on entend par émulsion fractionnable une émulsion qu'il est possible de traiter selon les procédés décrits ci-dessus en vue d'obtenir une émulsion, de même nature (de type eau dans huile dans eau), de même formulation (mêmes compositions des différentes phases), qui soit à la fois stable et monodisperse.

Dans le contexte de la présente description, l'émulsion double de type eau dans l'huile dans eau est constituée de gouttelettes d'une émulsion inverse, Ei monodisperse, dispersées dans une phase continue aqueuse (ou phase aqueuse externe), l'émulsion Ei étant elle-même constituée de gouttelettes d'une phase aqueuse interne dispersées dans une phase huileuse.

Selon l'invention, le terme monodisperse caractérise les émulsions pour lesquelles la distribution granulométrique des gouttelettes de phase dispersée est très étroite.

On considère que la distribution est très étroite lorsque la polydispersité est inférieure ou égaie à 30%, et de préférence de l'ordre de 5 à 25%, par exemple entre 10 et 20%.

Dans le cadre de l'invention, la polydispersité est définie comme le rapport de l'écart-type de la courbe de Gauss représentant la variation du volume occupé par la matière dispersée en fonction du diamètre des gouttelettes au diamètre moyen des gouttelettes.

Ainsi, l'expression "emuision inverse monodisperse Ei" désigne une émulsion de type eau dans huile constituée de gouttelettes d'eau dispersées dans l'huile, pour laquelle la distribution granulométrique des gouttelettes d'eau est très étroite (polydispersité inférieure à 30 %).

Selon un premier aspect, la présente invention fournit une émulsion double, présentant une polydispersité supérieure à 30% (polydisperse), de type eau dans huile dans eau, stable et fractionnable. Dans cette émulsion double, la distribution du diamètre des gouttelettes d'émulsion Ei dispersées dans la phase continue aqueuse est large alors que la distribution du diamètre des gouttelettes de phase aqueuse interne dispersées dans la phase huileuse de l'émulsion Ei est étroite.

Plus précisément, l'émulsion double fractionnable de l'invention est constituée de 50 à 95% en poids, par rapport au poids total de l'émulsion double, de gouttelettes d'une émulsion inverse Ei monodisperse, dispersées dans une phase aqueuse continue ; l'émulsion inverse monodisperse Ei présentant une polydispersité inférieure ou égale à 30%;

- la phase aqueuse continue comprenant un agent épaississant polysaccharidique à raison de 1 à 10% en poids par rapport au poids total de la phase continue aqueuse ; un copolymère séquencé hydrosoluble d'oxyde d'éthylène et d'oxyde de propylène à titre de tensioactif; et un agent d'équilibrage de la pression osmotique ;
- l'émulsion Ei présentant une viscosité inférieure ou égale à la viscosité de la phase aqueuse continue et étant constituée de 50 à 95% en poids, par rapport au poids total de Ei, de gouttelettes d'une phase aqueuse interne dispersées dans une phase huileuse ;

- la phase aqueuse interne comprenant au moins une substance active hydrophile ;
- la phase huileuse comprenant du polyricinoléate de polyglycérol à titre de tensioactif; la concentration en agent d'équilibrage étant suffisante pour assurer l'équilibre osmotique entre la phase aqueuse de l'émulsion Ei et la phase aqueuse continue.

L'émulsion double de l'invention comprend de 50 à 95% en poids, de préférence au moins 60% en poids, par exemple de 65 à 85% en poids, par rapport au poids total de l'émulsion double, de gouttelettes d'émulsion Ei.

Des exemples d'agents épaississants polysaccharidiques utilisables selon l'invention sont la mousse d'irlande, la gomme adragante, l'amidon et ses dérivés, la cellulose et ses dérivés (et plus particulièrement l'hydroxyéthylpropylcellulose, l'hydroxybutylméthylcellulose, l'hydroxypropylméthylcellulose, l'hydroxyéthylcellulose ou la carboxyméthylcellulose), la gomme xanthane, la gomme de guar, les carraghénanes et les alginates.

Les agents épaississants préférés sont les alginates qui sont des sels polymères de type linéaire comprenant des motifs acide $\beta$-(1→4)-D-mannosyluroniques et acide $\alpha$-(1→4)-L-gulosyluroniques.

Parmi ceux-ci, on préfère, plus particulièrement, les alginates présentant une masse molaire moyenne comprise entre 1000 et 10000 g/mol, mieux encore entre 3000 et 6000 g/mol.

La quantité d'agent épaississant est limitée selon l'invention ; elle ne doit pas dépasser 10% en poids par rapport au poids total de la phase aqueuse continue. De préférence, la teneur en agent épaississant est comprise entre 1 et 5% en poids par rapport au poids total de la phase aqueuse continue, mieux encore entre 1 et 3% en poids, une valeur nettement préférée étant autour de 1,5% en poids.

Les tensioactifs de type copolymère séquencé de l'oxyde d'éthylène et de l'oxyde de propylène sont largement répandus dans la technique.

Il est essentiel selon l'invention que ledit copolymère soit hydrosoluble. Sont préférés, les copolymères présentant un HLB supérieur à 15, mieux encore supérieur à 20 et par exemple d'au moins 25. Le terme HLB (Hydrophilic Lipophilic Balance) désigne le rapport de l'hydrophilie des groupements polaires des molécules de tensioactifs à l'hydrophobie de leur partie lipophile. Des valeurs de HLB sont notamment rapportées dans différents manuels de base tels que le « Handbook des excipients pharmaceutiques, The Pharmaceutical Press, London, 1994)».

Selon un mode de réalisation préféré de l'invention, on utilise à titre de copolymère séquencé préféré, un copolymère répondant à la formule (I) :

$$H-(OCH_2CH_2)_a-(O-CH(CH_3)-CH_2)_b - (OCH_2CH_2)_a - OH \qquad (I)$$

dans laquelle

a est un entier compris entre 50 et 120, de préférence entre 70 et 110 ; et
b est un entier compris entre 20 et 100, de préférence entre 30 et 70.

De tels polymères sont commercialisés par la Société ICI sous la marque Synperonic PE®.

Parmi ceux-ci, on sélectionnera avantageusement ceux présentant une masse molaire comprise entre 2000 et 15000 g/mol, de préférence entre 5000 et 14000 g/mol, de préférence entre 8000 et 12000 g/mol.

La viscosité cinématique des polymères de type Synperonic PE® est de préférence comprise entre 150 et 1200 mm$^2$.s$^{-1}$ à 100°C, mieux encore entre 500 et 1100 mm$^2$.s$^{-1}$.

On préfère plus particulièrement le Poloxamer 188 de formule (I) ci-dessus dans laquelle a = 75 et b = 30.

La quantité de copolymère tensioactif devant être utilisée est facilement déterminée par l'homme de métier à l'aide de ses connaissance de base de la technique, en fonction de la nature dudit copolymère, ainsi que de la nature des différents constituants en présence.

Lorsque le copolymère tensioactif répond à la formule (I) ci-dessus et en présence d'un alginate dans la phase aqueuse continue, à titre d'agent épaississant, une teneur en copolymère variant entre 3 et 10%, par exemple entre 3 et 8% en poids par rapport au poids total de la phase aqueuse continue est particulièrement appropriée.

La présence d'un agent d'équilibrage de la pression osmotique dans la phase aqueuse continue est une caractéristique essentielle de l'invention. Selon l'invention, l'agent d'équilibrage de la pression osmotique est une substance hydrophile dénuée d'activité de surface.

A titre d'agents d'équilibrage utilisables selon l'invention, l'homme du métier pourra mettre en oeuvre l'un quelconque des agents d'équilibrage couramment utilisés dans la technique.

Des exemples particulièrement préférés en sont le sorbitol, le glycérol et les sels minéraux tels que les sels d'ammonium et les sels de métaux alcalins ou alcalino-terreux.

Selon un mode de réalisation préféré de l'invention, on utilise un glucide monosaccharidique, tel que le fructose, le lyxose, l'arabinose, le ribose, le xylose, le glucose, l'altrose, le mannose, l'idose, le galactose, l'érythrose, le thréose, le sorbose, le fucose ou le rhamnose, le glucose étant nettement préféré.

L'homme du métier fixera facilement la concentration en agent d'équilibrage de la pression osmotique en fonction de la concentration en substance active présente dans la phase aqueuse interne.

Plus précisément, la concentration en agent d'équilibrage sera déterminée de façon à assurer J'équilibre osmotique entre la phase aqueuse interne et la phase aqueuse continue. Elle dépend de l'osmolalité de la ou des substances actives hydrophiles (présentes dans la phase aqueuse interne) ainsi que de l'osmolalité dudit agent d'équilibrage dans la phase aqueuse continue.

L'émulsion Ei comprend de 50 à 95% en poids, par rapport au poids total de Ei, de préférence au moins 60% de gouttelettes, par exemple entre 60 et 80% en poids, d'une phase aqueuse interne. Cette concentration en gouttelettes est indispensable pour procurer à l'émulsion Ei une viscosité suffisante.

Le caractère fractionnable de l'émulsion double résultante ainsi que la possibilité de préparer une émulsion double monodisperse impose en effet que la viscosité de l'émulsion Ei soit inférieure ou égale à la viscosité de la phase aqueuse continue. A titre d'indication la viscosité de la phase aqueuse continue varie entre 0,01 et 10 Pa.s (10 et 10000 cp).

La nature de la phase huileuse de l'émulsion Ei n'est pas déterminante selon invention, dès lors que les caractéristiques de viscosité sont assurées et dans la mesure où celle-ci, contlent à titre de tensioactif du polyricinoléate de polyglycérol.

Le polyricinoléate de polyglycérol répond à la formule :

$$R_1O\text{-}(CH_2\text{-}CH(OR_2)\text{-}CH_2O)_n\text{-}R_3 \tag{II}$$

où

n est égal de 2 à 12;

$R_1$, $R_2$ et $R_3$ représentent chacun, indépendamment, H ou un radical dérivé de l'acide ricinoléique de formule (III), l'un au moins représentant ce dérivé:

$$H\text{-}[O\text{-}CH((CH_2)_5CH_3)\text{-}CH_2\text{-}CH{=}CH\text{-}(CH_2)_7\text{-}CO]_m\text{-} \tag{III}$$

où

m est égal de 2 à 10.

De préférence, n = 2-10 et m = 2-10 ; plus préférentiellement, n = 2-5 et m = 4-10.

Des exemples de polyricinoléate de polyglycérol du commerce sont Admul Wol 1403 (Quest), Radiamuls Poly 2253 (Fina) et Grindsted PGPR 90 (Danisco).

Les polyricinoléates de polyglycérol préférablement utilisés selon l'invention sont ceux par lesquels n varie entre 2 et 5 (et vaut par exemple 3) et m varie entre 5 et 10 (et vaut par exemple 7).

Selon une variante préférée de l'invention, la phase huileuse comprend de 60 à 99% en poids de polyricinoléate de polyglycérol.

La phase huileuse comprend généralement une ou plusieurs huiles dont la nature n'est pas critique.

Par "huile", on entend selon l'inventon toute substance liquide hydrophobe, insoluble ou très peu soluble dans l'eau, susceptible d'être mise en émulsion aqueuse en présence du polyricinoléate de polyglycérol comme agent tensioactif.

Une telle substance hydrophobe et insoluble peut être par un exemple un polymère organique tel qu'un polyorganosiloxane, une huile minérale telle que l'hexadécane, une huile végétale telle que de l'huile de soja ou d'arachide ou des cristaux liquides (lyotropiques ou thermotropiques).

De manière préférée, la phase huileuse contient un hydrocarbure en $C_8\text{-}C_{30}$ aliphatique, cyclique et/ou aromatique. A titre d'exemple, la phase huileuse comprend du dodécane.

A titre d'exemple, la phase huileuse comprend de 60 à 99% en poids de polyricinoléate de polyglycérol et de 1 à 40% en poids de dodécane.

La phase aqueuse interne comprend au moins une substance active hydrosoluble.

De telles substances actives sont préférablement sous forme de sels ou de polymères hydrosolubles.

Néanmoins, il peut s'agir de n'importe quel type de substance active généralement utilisée dans l'un ou plusieurs des domaines pharmaceutique, cosmétique, phytosanitaire, alimentaire et/ou des peintures.

Elle peut ainsi être choisie parmi les vitamines (E, C), enzymes, insuline, agents antalgiques, antimitotiques, anti-inflammatoires ou antigiaucomateux, vaccins, agents anti-cancéreux, antagonistes narcotiques, agents de détoxication (salicylates, barbiturates), agents dépilatoires, agents correcteurs ou masqueurs de goût, sels hydrosolubles, acides, bases, vinaigre, glucose, colorants, conservateurs ou leurs mélanges.

Lorsque la substance active n'est pas sous la forme de sel organique ou minéral ou de polymère hydrosoluble, il est avantageux d'ajouter à ladite phase aqueuse interne un sel tel qu'un chlorure de métal alcalin (NaCl ou KCl) ou un polymère hydrosoluble tel qu'un alginate, de l'hydroxyéthylcellulose, de la carboxyméthylcellulose ou un acide poly (acrylique).

La concentration en substance active dépend de la nature de la substance active et de l'application envisagée.

L'émulsion double de l'invention peut-être préparée selon un procédé consistant à :

a - disperser, de façon conventionnelle, une solution aqueuse $A_1$ comprenant au moins une substance active hydrophile dans une phase huileuse comprenant du polyricinoléate de polyglycérol comme agent tensioactif, de façon à obtenir une émulsion inverse stable de type eau dans huile, la quantité de phase aqueuse $A_1$ étant choisie de façon à conduire à une émulsion inverse comprenant de 50 à 95 % en poids de gouttelettes de phase aqueuse interne ;

b - soumettre l'émulsion obtenue à l'étape précédente à un cisaillement contrôlé de telle sorte qu'un même cisaillement maximal soit appliqué à l'ensemble de l'émulsion, de façon à obtenir l'émulsion inverse monodisperse correspondante ;

c - ajouter, goutte à goutte, sous agitation constante, l'émulsion monodisperse résultante dans une phase aqueuse $A_2$ comprenant 1 à 10 % en poids d'un agent épaississant polysaccharidique ; un copolymère séquencé d'oxyde d'éthylène et d'oxyde de propylène, à titre de tensioactif ; et un agent d'équilibrage de la pression osmotique, ladite phase aqueuse $A_2$ présentant une viscosité au moins égale à la viscosité de l'émulsion monodisperse.

A l'étape a) l'émulsification est mise en oeuvre de façon conventionnelle. Lors de la dispersion de la phase aqueuse $A_1$ dans la phase huileuse, la phase huileuse est maintenue sous agitation par utilisation de l'un quelconque des dispositifs couramment utilisés dans la technique.

Parmi les dispositifs connus, on préfère les agitateurs mécaniques à cisaillement dont la géométrie assure une certaine homogénéité de cisaillement et ceci de façon à éviter la formation de gouttelettes de trop petite dimension et notamment d'un diamètre inférieur à 1 μm.

A l'étape b), l'émulsion inverse obtenue à l'étape a), qui est polydisperse, est transformée en émulsion inverse monodisperse. La technique utilisée pour ce faire est celle décrite dans la demande internationale WO-A-9738787. Elle est rappelée ci-après.

A l'étape c), il est essentiel selon l'invention de veiller à ce que chaque goutte d'émulsion inverse monodisperse obtenue à l'étape précédente b) soit incorporée dans la phase continue (phase aqueuse $A_2$) avant d'ajouter la goutte suivante. Ceci permet d'éviter la formation de gouttelettes d'émulsion multiple en dispersion dans la phase continue $A_2$, une émulsion multiple étant définie comme la superposition de plus de deux émulsions.

De façon à répondre cette exigence, l'homme de métier règlera la vitesse d'introduction des gouttes en fonction du type d'agitateur utilisé et de l'efficacité de l'agitation.

De façon avantageuse, la phase continue $A_2$ est maintenue sous agitation par action d'un moulin colloïdal. A titre d'indication, la vitesse de rotation des pales est inférieure à 1 tour par seconde et la vitesse d'introduction des gouttes est maintenue au dessous de 1 goutte par seconde.

Il doit être entendu cependant que selon l'invention, la phase aqueuse continue $A_2$ ne doit pas être agitée trop vigoureusement, de façon à ne pas provoquer la formation de gouttelettes d'émulsion d'un diamètre inférieur à 1 μm.

L'émulsion obtenue, selon ce procédé, est polydisperse, c'est-à-dire que la distribution du diamètre des gouttelettes d'émulsion inverse Ei est large, la polydispersité étant supérieure à 30%.

L'émulsion obtenue est par ailleurs viscoélastique.

Le terme viscoélastique a la siginification qui lui est généralement attribuée dans la technique. De manière générale, un matériau est dit viscoélastique lorsque sous l'effet d'un cisaillement il présente à la fois les caractéristiques d'un matériau purement élastique, c'est-à-dire qu'il est capable de stocker de l'énergie, ainsi que les caractéristiques d'un matériau purement visqueux, c'est-à-dire qu'il est également capable de dissiper de l'énergie.

Selon l'invention, le domaine de viscoélasticité est délimité par les équations (1) et (2) suivantes figurant les variations du module élastique G' et du module de dissipation G" :

$$(1) \qquad 1.10^{-2} \text{ dyne/cm}^2 \ (1.10^{-3} \text{ N/m}^2) \leq (G'^2 + G''^2)^{+ 1/2} \leq 1.10^8 \text{ dyne/cm}^2$$

$$(1.10^7 \text{ N/m}^2).$$

$$(2) \qquad \frac{G'}{G''} \geq 0{,}01$$

G' et G" étant mesurés au taux de cissaillement maximal auquel on entend soumettre l'émulsion primaire.

De manière préférée, les modules G' et G" satisfont les équations suivantes (3) et (4).

$$(3) \qquad 1 \text{ dyne/cm}^2 \ (1.10^{-1} \text{ N/m}^2) \leq (G'^2 + G''^2)^{+1/2} \leq 1.10^4 \text{ dyne/cm}^2$$

$$(1.10^3 \text{ N/m}^2)$$

$$(4) \qquad 0{,}1 \leq \frac{G'}{G''} \leq 10$$

Selon un second de ses aspects, l'invention concerne un procédé de préparation d'une émulsion double de type eau dans huile dans eau, stable, présentant une polydispersité inférieure ou égale à 30% (monodisperse) au départ de l'émulsion double polydisperse correspondante de l'invention.

Ce procédé comprend l'étape d) essentielle consistant à soumettre J'émulsion polydisperse obtenue à l'issue de l'étape c) précédente à un cisaillement contrôlé de telle sorte qu'un même cisaillement maximal soit appliqué à l'ensemble de l'émulsion. La technique utilisée pour ce faire est la même qu'à l'étape b) ci-dessus, à savoir celle exposée dans la demande internationale WO-A-9738787. Cette technique est maintenant exposée en détail.

On peut envisager par exemple de soumettre l'ensemble de l'émulsion à un taux de cisaillement constant.

Cependant, l'invention n'entend pas se limiter à ce mode de réalisation particulier.

De fait, le taux de cisaillement peut être distinct, à un temps donné, pour deux points de l'émulsion.

En variant la géométrie du dispositif utilisé pour générer les forces de cisaillement, il est possible de moduler le taux de cisaillement appliqué à l'émulsion dans le temps ou/et l'espace.

Pour autant que l'émulsion soit en écoulement lorsque soumise au cisaillement, chaque partie de l'émulsion peut être ainsi soumise à un taux de cisaillement qui varie dans le temps. Le cisaillement est dit contrôlé lorsque quelle que soit la variation dans le temps du taux de cisaillement, celui-ci passe par une valeur maximale qui est la même pour toutes les parties de l'émulsion, à un instant donné qui peut différer d'un endroit à l'autre de l'émulsion.

De manière préférée, de façon à contrôler le cisaillement, on introduit l'émulsion double polydisperse dans un dispositif approprié.

Des dispositifs appropriés sont décrits dans la demande FR-A-97 00690 ou dans la demande internationale WO-A-9738787.

Brièvement, un dispositif approprié est une cellule de Couette dans laquelle le cisaillement est constant, la cellule de Couette étant constituée de deux cylindres concentriques en rotation l'un par rapport à l'autre.

Un second dispositif est une cellule constituée de deux plaques parallèles en mouvement oscillant l'une par rapport à l'autre et entre lesquelles on force l'émulsion double polydisperse.

Un autre dispositif est une cellule constituée de deux disques concentriques en rotation l'un par rapport à l'autre et entre lesquels circule l'émulsion double polydisperse.

Ces cellules sont couramment utilisées dans des appareils commerciaux, en particulier des rhéomètres permettant de mesurer les propriétés viscoélastiques de liquides (par exemple : CARRIMED ou RHEOMETRICS).

La valeur maximale du taux de cisaillement auquel est soumise l'émulsion primaire dépend de la fréquence de rotation, de la fréquence d'oscillation et/ou de l'amplitude d'oscillation du mouvement des plaques, cylindres et disques des dispositifs décrits ci-dessus.

De façon générale, on a constaté qu'une valeur élevée du taux maximal de cisaillement conduit à la formation d'émulsions constituées de gouttelettes d'émulsion $E_i$ de très petite dimension et présentant une distribution granulométrique très étroite.

De façon à augmenter la valeur du taux de cisaillement maximal, l'homme du métier peut jouer sur plusieurs paramètres, à savoir la fréquence de rotation, la fréquence d'oscillation et/ou l'amplitude d'oscillation du mouvement des plaques, cylindres et disques des dispositifs décrits ci-dessus, ainsi que sur la dimension des enceintes respectives de ces différents dispositifs dans la direction perpendiculaire au sens de l'écoulement imposé par le mouvement de la surface.

On notera que le taux maximal de cisaillement varie de façon linéaire avec l'amplitude d'oscillation et/ou la fréquence du mouvement et de façon inversement proportionnelle avec la dimension de l'enceinte dans une direction perpendiculaire à l'écoulement.

On préfère, que le taux maximal de cisaillement soit compris entre 1 et $1.10^5$ s$^{-1}$, de préférence entre 100 et 5000 s$^{-1}$, par exemple entre 500 et 5 000 s$^{-1}$.

Il est important, selon l'invention, que l'écoulement de l'émulsion double, polydisperse, de départ soit homogène (absence de fractures) lors de son passage dans l'un quelconque des dispositifs décrits ci-dessus.

Plus précisément lorsque le cisaillement contrôlé est réalisé par mise en contact de ladite émulsion avec une surface solide en mouvement, un écoulement homogène est caractérisé par un gradient de vitesse constant dans une direction perpendiculaire à la surface solide en mouvement.

Un moyen de contrôler l'écoulement consiste à jouer sur la dimension d des enceintes dans la direction perpendiculaire au sens de l'écoulement imposé par le mouvement de la surface.

On notera que, dans le cas du dispositif de Couette, cette dimension d est définie par la différence $(R_3-R_2)$ où $R_2$ et $R_3$ sont respectivement les rayons des cylindres interne et externe du dispositif de Couette.

Dans le cas de la cellule constituée de deux plaques parallèles en mouvement oscillant l'une par rapport à l'autre, cette dimension d est défini par la distance séparant les deux plaques dans une direction qui leur est perpendiculaire.

Dans le cas de la cellule constituée de deux disques concentriques en rotation l'un par rapport à l'autre, cette dimension est définie par la distance séparant les deux disques dans la direction de l'axe de rotation du disque en mouvement.

De façon générale, un écoulement hétérogène peut être rendu homogène par réduction de la taille de l'enceinte et plus particulièrement par réduction de sa dimension dans la direction perpendiculaire au sens de l'écoulement.

Ainsi dans le cas des trois dispositifs mentionnés ci-dessus, la dimension d est préférablement maintenue au-dessous de 200 μm, par exemple entre 100 et 200 μm.

Le procédé de l'invention permet de préparer des émulsions doubles dont la taille des gouttelettes d'émulsion $E_i$ d'un diamètre situé dans l'intervalle 1 et 50 μm, notamment dans l'intervalle 2 et 10 μm.

La valeur du diamètre des gouttelettes de l'émulsion $E_i$ peut être mesurée par mise en oeuvre de l'une quelconque des méthodes connues de l'art antérieur : deux de ces méthodes sont couramment utilisées dans la technique. La première est la microscopie à contraste de phase, la seconde est la granulométrie laser. Une troisième méthode appropriée au cas d'émulsions constituées d'au moins 65 % en poids de phase dispersée consiste à remplir de l'émulsion double une cellule permettant la transmission d'au moins 80 % de la lumière incidente. En envoyant un faisceau laser à travers la cellule et en plaçant un écran sur le trajet après la cellule on remarque un anneau de diffusion dont la position donne directement le diamètre moyen 2a des gouttelettes en utilisant la formule classique :

$$2a = \lambda . (n.\sin\theta/2)^{-1}$$

θ étant l'angle formé par la position de l'anneau et le faisceau initial,
λ étant la longueur d'onde de la lumière, et
n étant d'indice de réfraction du milieu.

En procédant ainsi, à l'étape b) et à l'étape d) décrites ci-dessus, on obtient des émulsions monodisperses, c'est-à-dire dont la polydispersité est dans tous les cas inférieure à 30 %, de préférence comprise entre 5 et 25 %, par exemple comprise entre 10 et 20 % ou au moins comprise entre 15 et 20 %.

A l'étape b) la polydispersité caractérise la distribution du diamètre des gouttelles de phase aqueuse interne $A_1$.

A l'étape d) la polydispersité caractérise la distribution du diamètre des gouttelettes d'émulsion inverse Ei.

Le procédé de l'invention trouve des applications dans de nombreux domaines tels que les domaines pharmaceutiques, cosmétiques, le domaine des détergents, le domaine de l'affichage à cristal liquide, le domaine du phytosanitaire et des peintures à l'eau. Les émulsions de l'invention sont également utiles dans le traitement des surfaces.

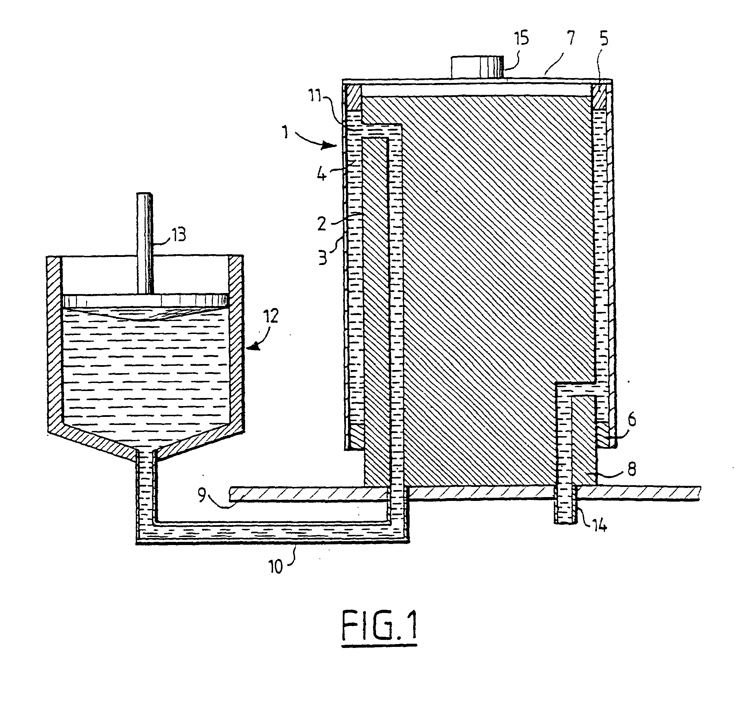

Les exemples suivants lesquels font référence aux figures 1 à 5, illustrent plus avant l'invention.

Pour tous les exemples, le dispositif utilisé pour la préparation d'émulsions monodisperses à partir d'émulsions correspondantes polydisperses est la cellule de Couette représentée à la figure 1 : celle-ci est constituée de deux cylindres concentriques 2 et 3 en rotation constante l'un par rapport à l'autre. Sur la figure 1, le cylindre interne 2 est immobile alors que le cylindre externe 3 est animé d'un mouvement de rotation uniforme par rapport à un axe d'entraînement 15. Les cylindres concentriques 2 et 3 délimitent une enceinte 4 annulaire. Aux extrémités supérieure et inférieure de l'enceinte 4 sont disposés deux roulements à billes étanches 5 et 6 annulaires. Un couvercle 7 dont les dimensions correspondent à celles du cylindre externe 3 ferme la partie supérieure du dispositif 1.

Les cylindres 2 et 3 concentriques sont décalés l'un par rapport à l'autre dans le sens de la longueur de telle sorte que la partie inférieure 8 du cylindre interne repose sur un support plan 9.

La cellule de Couette 1 représentée sur la figure 1 comprend également un conduit d'alimentation 10 en émulsion polydisperse qui traverse le support 9 et débouche dans la partie supérieure 11 de l'enceinte 4. L'autre extrémité du conduit d'alimentation est reliée à un réservoir 12 contenant l'émulsion polydisperse. Le débit d'alimentation en émulsion polydisperse est contrôlé par un piston 13. La partie inférieure de l'enceinte 4 diamétralement opposée au point 11 est munie d'une conduite d'évacuation 14 de l'émulsion monodisperse laquelle traverse le support plan 9.

Le dispositif de la figure 1 permet la préparation en continu de l'émulsion monodisperse cible. En cours de production, l'enceinte 4 est alimentée en continu en émulsion polydisperse par la conduite 10. L'émulsion polydisperse circule dans l'enceinte 4 tout en étant soumise à des forces de cisaillement engendrées par la rotation uniforme du cylindre externe 3 sur lui-même.

Dans un tel dispositif l'émulsion polydisperse est soumise à un taux de cisaillement constant, le taux de cisaillement étant défini ici comme le rapport de la vitesse linéaire au point de contact avec la surface du cylindre externe 3 à la différence $(R_3-R_2)$ où $R_2$ et $R_3$ sont respectivement les rayons des cylindres interne 2 et externe 3.

La taille des gouttelettes d'émulsion $E_i$ a été déterminée dans tous les cas par microscopie à contraste de phase et par granulométrie laser.

## EXEMPLE 1

**Préparation d'une émulsion double monodisperse pour laquelle le diamètre moyen des gouttelettes d'émulsion $E_i$ est de 0,3 $\mu$m.**

Dans cet exemple, on simule la présence d'une substance active dans la phase aqueuse interne en introduisant dans celle-ci du chlorure de potassium.

Dans un premier temps, on prépare une émulsion inverse polydisperse, eau dans dodécane, stabilisée par du polyricinoléate de polyglycérol. Cette émulsion inverse est préparée en introduisant une solution aqueuse 0,2 M de chlorure de potassium dans une phase continue, maintenue sous agitation constante et constituée de dodécane et de polyricinoléate de polyglycérol dans un rapport pondéral 1 : 9. La quantité de solution aqueuse ajoutée est telle que la phase aqueuse dispersée représente 80 % de la masse totale de l'émulsion inverse.

Cette émulsion inverse est ensuite cisaillée à un taux de cisaillement de 1050 $s^{-1}$ dans un dispositif de Couette caractérisé par un entrefer d de 100 $\mu$m. L'émulsion obtenue $E_i^\circ$ est monodisperse, le diamètre moyen des gouttelettes de phase aqueuse interne étant de 0,3 $\mu$m.

On verse une solution aqueuse constituée d'eau, de 2 % en poids d'alginate HF120L (polysaccharide de masse molaire moyenne 5 400 g), de 5 % en poids de synperonic PE/F 68 (commercialisé par ICI, viscosité = 1,325 Pa·s (1325 cp) à 77°C, masse molaire = 8 350, HLB = 29 et formule I dans laquelle a = 75 et b = 30) et de glucose en une quantité suffisante pour que ladite solution aqueuse soit 0,4 M en glucose, dans un moulin colloïdal. La vitesse de rotation des pales est fixée à 1 tour par seconde. On ajoute alors, goutte à goutte, à ladite phase aqueuse, maintenue sous agitation, l'émulsion inverse monodisperse $E_i^\circ$ préparée ci-dessus. La quantité d'émulsion $E_i^\circ$ versée dans la solution aqueuse de glucose, d'alginate et de synperonic PE/F68 est telle que le rapport Ø g (fraction massique d'émulsion $E_i^\circ$) de la masse d'émulsion $E_i^\circ$ à la masse totale de l'émulsion double est de 0,70.

La vitesse d'introduction des gouttes de l'émulsion $E_i^\circ$ dans la phase aqueuse est ajustée de façon à assurer l'incorporation de chaque goutte avant introduction de la goutte suivante.

L'émulsion obtenue, qui est une émulsion double, stable, polydisperse, est alors introduite dans une cellule de Couette, telle que représentée à la figure 1, pour laquelle $R_3-R_2$ = 100 $\mu$m et dans laquelle le taux de cisaillement constant est de 1050 $s^{-1}$. En sortie du dispositif de Couette, on récupère une émulsion double, stable, monodisperse caractérisée par une polydispersité inférieure à 20 %, la polydispersité étant définie comme le rapport de l'écart-type de la courbe de Gauss représentant la variation du volume occupé par la matière dispersée en fonction du diamètre des gouttelettes au diamètre moyen des gouttelettes d'émulsion $E_i^\circ$. Le diamètre moyen des gouttelettes d'émulsion $E_i^\circ$ est de 4 $\mu$m.

## EXEMPLE 2

**Etude de l'influence du taux de cisaillement et de la fraction massique de la phase aqueuse interne sur le diamètre des gouttelettes d'émulsion $E_i$.**

La fraction massique $Ø_i$ de la phase aqueuse interne est définie comme le rapport de la masse de phase aqueuse interne à la masse totale de l'émulsion $E_i$.

A l'exemple 1, $Ø_i$ vaut 0,8.

On prépare diverses émulsions inverses monodisperses $E_i$ par simple dilution dans du dodécane de l'émulsion $E_i^\circ$ préparée à l'exemple 1. On obtient ainsi trois émulsions de $Ø_i$ différents :

$E_i^1$ : $Ø_i$ = 0,75
$E_i^2$ : $Ø_i$ = 0,65
$E_i^3$ : $Ø_i$ = 0,55

En opérant comme à l'exemple 1, on prépare, à partir de ces émulsions inverses monodisperses, trois émulsions doubles polydisperses de fraction massique Øg identique et égale à 0,70, Øg étant définie comme à l'exemple 1, c'est-à-dire comme le rapport de la masse d'émulsion $E_i^1$, $E_i^2$ respectivement $E_i^3$, à la masse totale d'émulsion double. Puis ces émulsions doubles polydisperses sont cisaillées dans un dispositif de Couette.

La distance $R_3$-$R_2$ dans la cellule de Couette est fixée à 100 μm. On fait varier la vitesse de rotation du cylindre 3 de telle sorte que le taux de cisaillement varie entre 150 et 12 000 s$^{-1}$.

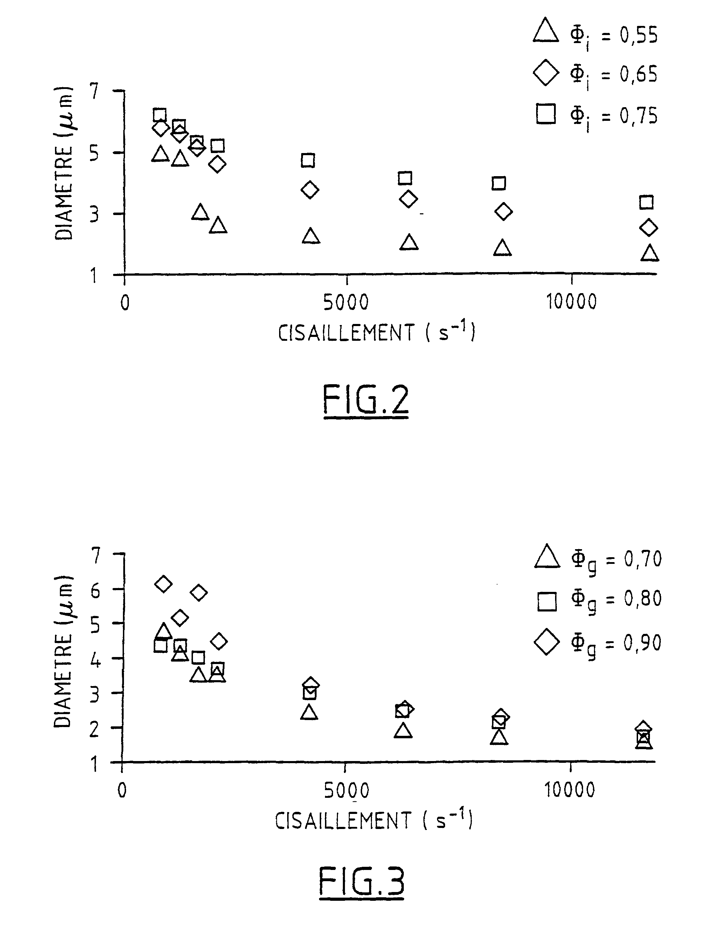

Pour chaque taux de cisaillement, on mesure le diamètre moyen des gouttelettes d'émulsion $E_i$. La figure 2 représente les variations du diamètre moyen des gouttelettes d'émulsion en fonction du cisaillement pour trois fractions massiques $Ø_i$ différentes.

On observe une réduction du diamètre des gouttelettes à taux de cisaillement élevé, pour une fraction massique $Ø_i$ donnée.

Par ailleurs, pour un cisaillement donné, on observe une réduction du diamètre des gouttelettes par réduction de la fraction massique $Ø_i$. Ainsi, deux paramètres permettent de contrôler le diamètre moyen des gouttelettes à savoir la fraction massique des gouttelettes de phase aqueuse interne et le taux de cisaillement.

## EXEMPLE 3

**Etude de l'influence du taux de cisaillement et de la fraction massique de l'émulsion inverse $E_i$.**

Au départ de l'émulsion inverse monodisperse $E_i^2$ de $Ø_i$ = 0,65 préparée à l'exemple 2, on prépare diverses émulsions doubles polydisperses de Øg variés, en opérant comme à l'exemple 1 sinon que la solution aqueuse utilisée (phase continué externe) est constituée d'eau, de glucose (0,4 M), de 1,5 % en poids d'alginate et de 5 % en poids de synperonic PE/F 68.

Les quantités respectives d'émulsion monodisperse $E_i^2$ et de solution aqueuse (phase continue) sont calculées de façon à obtenir des fractions massiques Øg d'émulsion différentes :

Pour une première émulsion double $E^1$, Øg = 0,70.

Pour une seconde émulsion double $E^2$, Øg = 0,80.

Pour une troisième émulsion double $E^3$, Øg = 0,90.

Chacune des émulsions doubles polydisperses obtenues $E^1$ à $E^3$ est introduite dans une cellule de Couette ($R_3$-$R_2$ = 100 μm) et soumise à un taux de cisaillement donné.

Pour chaque émulsion double, on étudie l'influence du taux de cisaillement sur le diamètre des gouttelettes.

Les résultats sont rapportés à la figure 3.

De même qu'à l'exemple précédent, on observe une diminution du diamètre moyen des gouttelettes d'émulsion pour des valeurs croissantes du taux de cisaillement.

Dans le cas des trois émulsions $E^1$, $E^2$ et $E^3$ les courbes représentant la variation du diamètre moyen en fonction du cisaillement sont quasiment superposables. L'influence de Øg sur le diamètre moyen des gouttelettes est pratiquement négligeable.

## EXEMPLE 4

**Etude de l'influence de la viscosité de la phase aqueuse continue, externe.**

Dans cet exemple on prépare deux émulsions doubles polydisperses à concentration différente en alginate HF 120L.

En opérant comme à l'exemple 1, on prépare les deux émulsions doubles polydisperses suivantes :

*Emulsion double $E^4$ :*

→   phase continue aqueuse, externe :

Pourcentage en poids ou concentration calculé(e) par rapport à la phase aqueuse externe, continue

| | |
|---|---|
| glucose | 0,4 M |
| synperonic PE/F68 | 5 % |
| alginate | 2 % |
| eau | qsp. |

→ émulsion inverse monodisperse $E_i^2$ : Øg = 0,7

*Emulsion double $E^5$ :*

→ phase continue aqueuse, externe :

Pourcentage en poids ou concentration cafcuié(e) par rapport à la phase aqueuse externe, continue

| glucose | 0,4 M |
|---|---|
| synperonic PE/F68 | 5 % |
| alginate | 3 % |
| eau | qsp. |

→ émulsion inverse monodisperse $E_i^2$ : Øg = 0,7.

L'émulsion monodisperse $E_i^2$ est celle préparée à l'exemple 2. Les deux émulsions doubles polydisperses obtenues sont introduites dans une cellule de Couette ($R_3$-$R_2$ = 100 µm) et soumises à un taux de cisaillement donné.

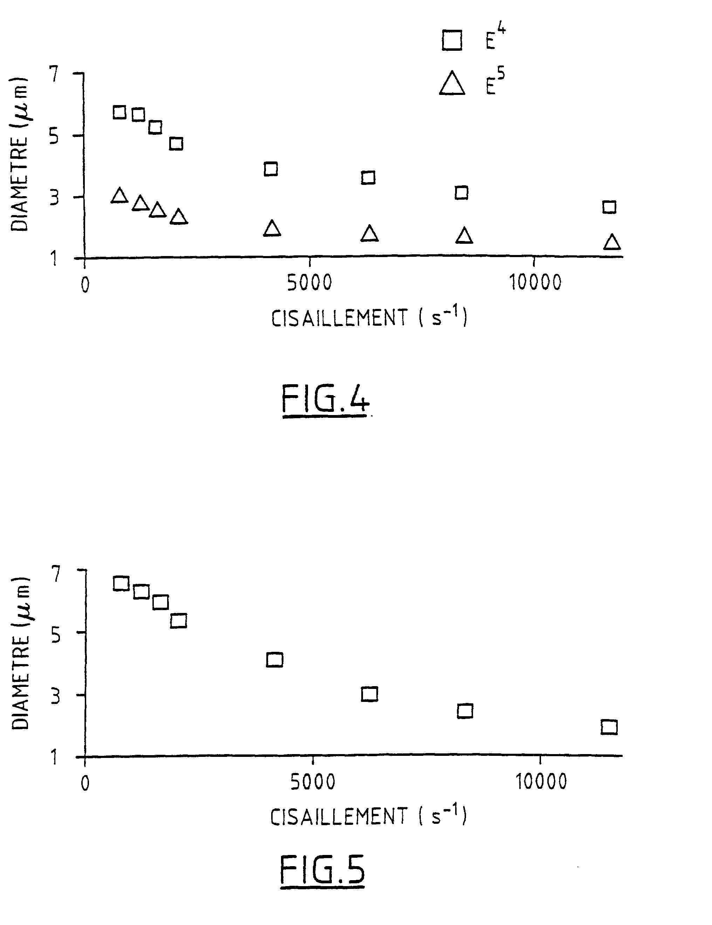

Pour chaque émulsion double, on étudie l'influence du taux de cisaillement sur le diamètre des gouttelettes. Les résultats sont rapportés à la figure 4.

Pour un cisaillement donné, plus la viscosité de la phase aqueuse continue est importante (quantité plus importante d'alginate), plus le diamètre moyen des gouttelettes d'émulsion est petit.

Notons que dans le cas de l'émulsion $E^4$ (alginate : 2 % en poids), et pour un cisaillement de 1 680 s$^{-1}$, on obtient une distribution très resserrée de la taille des gouttelettes.

• diamètre moyen = 5,3 µm
• polydispersité = 10,5 %

**EXEMPLE COMPARATIF**

En opérant comme à l'exemple 1, on prépare l'émulsion double $E_c$ suivante définie par une fraction massique Øg de 0,9, où Øg représente le rapport de la masse d'émulsion $E_i^2$ à la masse totale de l'émulsion double :

→ phase aqueuse continue externe :

Pourcentage en poids ou concentration calcufé(e) par rapport à la phase aqueuse externe :

| glucose | 0,4 M |
|---|---|
| synperonic PE/F68 | 25 % |
| eau | qsp. |

→ émulsion inverse monodisperse $E_i^2$ de l'exemple 2.

Dans le dispositif de Couette de la figure 1 ($R_3$-$R_2$ = 100 µm), on étudie l'influence du taux de cisaillement sur le diamètre des gouttelettes d'émulsion inverse.

La figure 5 représente les variations du diamètre moyen des gouttelettes en fonction du taux de cisaillement.

Toutefois on observe très rapidement une coalescence des gouttelettes.

Ainsi l'absence d'alginate ou la présence d'une quantité excessive de synperonic PR/F68 dans la phase aqueuse externe conduit à une grande instabilité de J'émulsion double résultante.

**Revendications**

1. Emulsion double stable, présentant une polydispersité supérieure à 30%, fractionnable, de type eau dans l'huile dans eau constituée de 50 à 95% en poids, par rapport au poids total de l'émulsion double, de gouttelettes d'une émulsion inverse monodisperse Ei dispersées dans une phase continue aqueuse ; l'émulsion inverse monodisperse Ei présentant une polydispersité inférieure ou égale à 30% ;

- la phase aqueuse continue comprenant un agent épaississant polysaccharidique à raison de 1 à 10% en poids par rapport au poids total de la phase continue aqueuse ; un copolymère séquence hydrosoluble d'oxyde d'éthylène et d'oxyde de propylène à titre de tensioactif ; et un agent d'équilibrage de la pression osmotique ;
- l'émulsion Ei présentant une viscosité inférieure ou égale à la viscosité de la phase aqueuse continue et étant constituée de 50 à 95% en poids, par rapport au poids total de Ei, de gouttelettes d'une phase aqueuse interne dispersées dans une phase huileuse ;
- la phase aqueuse interne comprenant au moins une substance active hydrophile ;
- la phase huileuse comprenant du polyricinoléate de polyglycérol à titre de tensioactif; la concentration en agent d'équilibrage étant suffisante pour assurer l'équilibre osmotique entre la phase aqueuse de l'émulsion Ei et la phase aqueuse continue.

2. Emulsion double selon la revendication 1, **caractérisée en ce qu'**elle comprend au moins 60% en poids de gouttelettes de l'émulsion Ei par rapport au poids total de l'émulsion double.

3. Emulsion double selon l'une quelconque des revendications précédentes, **caractérisée en ce que** l'agent d'équilibrage de la pression osmotique est le glucose.

4. Emulsion double selon l'une quelconque des revendications précédentes, **caractérisée en ce que** l'agent épaississant polysaccharidique est un alginate, de préférence un alginate présentant une masse molaire comprise entre 3000 et 6000 g/mol.

5. Emulsion double selon l'une quelconque des revendications précédentes, **caractérisée en ce que** le copolymère séquencé a pour formule :

$$H\text{-}(OCH_2CH_2)_a\text{-}(O\text{-}CH(CH_3)\text{-}CH_2)_b\text{-}(OCH_2CH_2)_a\text{-}OH \qquad (I)$$

dans laquelle
a est un entier compris entre 50 et 120 ; et
b est un entier comprise entre 20 et 100.

6. Emulsion double selon la revendication 5, **caractérisée en ce que** la phase continue aqueuse comprend de 1 à 5% en poids, par rapport au poids total de la phase aqueuse continue, d'alginate, de préférence d'un alginate présentant une masse molaire comprise entre 3000 et 6000 g/mol, en tant qu'épaississant ; et de 3 à 10% en poids par rapport au poids total de la phase aqueuse continue du polymère séquencé de formule (I) tel que défini à la revendication 5, en tant que tensioactif.

7. Emulsion double selon l'une quelconque des revendications précédentes, **caractérisée en ce que** la phase aqueuse continue comprend du glucose à titre d'agent d'équilibrage de la pression osmotique, le rapport molaire de la concentration en glucose dans la phase continue aqueuse à la concentration en substance active dans la phase aqueuse interne étant compris entre 1,5 et 2,5.

8. Emulsion double selon l'une quelconque des revendications précédentes, **caractérisée en ce que** la phase huileuse comprend de 60 à 90% en poids de polyricinoléate de polyglycérol et de 1 à 40% en poids de dodécane.

9. Emulsion double selon l'une quelconque des revendications précédentes, **caractérisée en ce que** Ei comprend au moins 60% en poids de gouttelettes de phase aqueuse interne.

10. Procédé de préparation d'une émulsion double stable de type eau dans l'huile dans eau, présentant une polydispersité inférieure ou égale à 30%, **caractérisé en ce que** l'on soumet une émulsion double selon l'une quelconque des revendications 1 à 9 à un cisaillement contrôlé de telle sorte qu'un même taux de cisaillement maximal soit appliqué à l'ensemble de l'émulsion.

11. Procédé selon la revendication 10, **caractérisé en ce que** le cisaillement contrôlé est réalisé par mise en contact de ladite émulsion double avec une surface solide en mouvement, le gradient de vitesse **caractérisant** l'écoulement de l'émulsion étant constant dans une direction perpendiculaire à ladite surface solide en mouvement.

**12.** Procédé selon l'une quelconque des revendications 10 à 11, **caractérisé en ce que** la valeur maximale du taux de cisaillement est de 1 à $1.10^5$ s$^{-1}$, de préférence de 100 à 5000 s$^{-1}$.

**13.** Procédé selon l'une quelconque des revendications 10 à 12, **caractérisé en ce que** le cisaillement est appliqué par écoulement homogène de l'émulsion double dans une cellule constituée de deux cylindres concentriques en rotation l'un par rapport à l'autre.

**14.** Procédé selon l'une quelconque des revendications 10 à 12, **caractérisé en ce que** le cisaillement est appliqué par écoulement homogène de l'émulsion double dans une cellule constituée de deux plaques parallèles en mouvement oscillant l'une par rapport à l'autre.

**15.** Procédé selon l'une quelconque des revendications 10 à 12, **caractérisé en ce que** le cisaillement est appliqué par écoulement homogène de l'émulsion double dans une cellule constituée de deux disques concentriques en rotation l'un par rapport à l'autre.

**16.** Emulsion double stable, présentant une polydispersité inférieure ou égale à 30%, de type eau dans huile dans eau, constituée de 50 à 95% en poids, par rapport au poids total de l'émulsion double, de gouttelettes d'une émulsion inverse monodisperse Ei dispersées dans une phase continue aqueuse ;

- l'émulsion inverse monodisperse Ei présentant une polydispersité inférieure ou égale à 30%.
- la phase continue aqueuse comprenant un agent épaississant polysaccharidique à raison de 1 à 10% en poids par rapport au poids total de la phase continue aqueuse ; un copolymère séquencé hydrosoluble d'oxyde d'éthylène et d'oxyde de propylène à titre de tensioactif ; et un agent d'équilibrage de la pression osmotique ;
- l'émulsion Ei présentant une viscosité inférieure ou égale à la viscosité de la phase aqueuse continue et étant constituée de 50 à 95% en poids, par rapport au poids total de Ei, de gouttelettes d'une phase aqueuse interne dispersées dans une phase huileuse ;
- la phase aqueuse interne comprenant au moins une substance active hydrophile ;
- la phase huileuse comprenant du polyricinoléate de polyglycérol à titre de tensioactif.

**17.** Emulsion selon la revendication 16, **caractérisée en ce que** le diamètre moyen des gouttelettes d'émulsion $E_i$ est compris entre 1 et 10 μm,

**18.** Emulsion selon la revendication 16 ou 17, dans laquelle la substance active hydrophile est choisie parmi les vitamine E, vitamine C, enzymes, agents antalgiques, antinitotiques, antiinflammatoires ou antiglaumateux, vaccins, agents anti-cancéreux antagonismes narconiques, agents de détoxication, agents dépilatoires, agents correcteurs, sels hydrosolubles, acides, bases, vinaigres, glucose, colorants, conservateurs ou leurs mélanges.

**Patentansprüche**

**1.** Fraktionierbare stabile Doppelemulsion mit einer Polydispersität von mehr als 30% vom Typ Wasser-in-Öl-in-Wasser, bestehend aus 50 bis 95 Gew.-%, bezogen auf das Gesamtgewicht der Doppelemulsion, Tröpfchen einer monodispersen Umkehremulsion Ei, die in einer kontinuierlichen wässrigen dispergiert ist; wobei die monodisperse Umkehremulsion Ei eine Polydispersität unter oder gleich 30% aufweist;

- wobei die kontinuierliche wässrige Phase ein Polysaccharid-Verdickungsmittel in einer Menge von 1 bis 10 Gew.-%, bezogen auf das Gesamtgewicht kontinuierlichen wässrigen Phase; ein wasserlösliches Block-Copolymer von Ethylenoxid und Propylenoxid als Netzmittel; und ein Mittel zum Ausgleich des osmotischen Drucks enthält;
- wobei die Emulsion Ei eine Viskosität unter oder gleich der Viskosität der kontinuierlichen wässrigen Phase aufweist und aus 50 bis 95 Gew.-%, bezogen auf das Gesamtgewicht von Ei, Tröpfchen einer inneren wässrigen Phase, die in einer öligen Phase dispergiert ist, besteht;
- wobei die innere wässrige Phase mindestens eine hydrophile aktive Substanz enthält;
- wobei die ölige Phase Polyglycerinpolyricinoleat als Netzmittel enthält; wobei die Konzentration an Ausgleichsmittel ausreicht, um das osmotische Gleichgewicht zwischen der wässrigen Phase der Emulsion Ei und der kontinuierlichen wässrigen Phase zu gewährleisten.

**2.** Doppelemulsion nach Anspruch 1, **dadurch gekennzeichnet, daß** sie mindestens 60 Gew.-% Tröpchen der Emulsion Ei, bezogen auf das Gesamtgewicht der Doppelemulsion, enthält.

**3.** Doppelemulsion nach einem der vorhergehenden Ansprüche, **dadurch gekennzeichnet, daß** das Mittel zum Ausgleich des osmotischen Drucks Glucose ist.

**4.** Doppelemulsion nach einem der vorhergehenden Ansprüche, **dadurch gekennzeichnet, daß** das Polysaccharid-Verdickungsmittel ein Alginat, vorzugsweise ein Alginat mit einer molaren Masse zwischen 3000 und 6000 g/mol ist.

**5.** Doppelemulsion nach einem der vorhergehenden Ansprüche, **dadurch gekennzeichnet, daß** das Block-Copolymer zur Formel hat:

$$H\text{-}(OCH_2CH_2)_a\text{-}(O\text{-}CH(CH_3)\text{-}CH_2)_b\text{-}(OCH_2CH_2)_a\text{-}OH \tag{I}$$

in der
a eine ganze Zahl zwischen 50 und 120 ist, und
b eine ganze Zahl zwischen 20 und 100 ist.

**6.** Doppelemulsion nach Anspruch 5, **dadurch gekennzeichnet, daß** die kontinuierliche wässrige Phase 1 bis 5 Gew.-%, bezogen auf das Gesamtgewicht der kontinuierlichen wässrigen Phase, Alginat, vorzugsweise ein Alginat, das eine molare Masse zwischen 3000 und 6000 g/mol besitzt, als Verdikkungsmittel; und 3 bis 10 Gew.-%, bezogen auf das Gesamtgewicht der kontinuierlichen wässrigen Phase, Blockpolymer der Formel (I) der in Anspruch 5 definierten Art als Netzmittel enthält.

**7.** Doppelemulsion nach einem der vorhergehenden Ansprüche, **dadurch gekennzeichnet, daß** die kontinuierliche wässrige Phase Glucose als Mittel zum Ausgleich des osmotischen Drucks enthält, wobei das molare Verhältnis der Glucosekonzentration in der kontinuierlichen wässrigen Phase zur Konzentration an aktiver Substanz in der inneren wässrigen Phase zwischen 1,5 und 2,5 beträgt.

**8.** Doppelemulsion nach einem der vorhergehenden Ansprüche, **dadurch gekennzeichnet, daß** die ölige Phase 60 bis 90 Gew.% Polyglycerinpolyricinoleat und 1 bis 40 Gew.-% Dodecan enthält.

**9.** Doppelemulsion nach einem der vorhergehenden Ansprüche, **dadurch gekennzeichnet, daß** Ei mindestens 60 Gew.-% Tröpchen von innerer wässriger Phase enthält.

**10.** Verfahren zur Herstellung einer stabilen Doppelemulsion vom Typ Wasser-in-Öl-in-Wasser mit einer Polydispersität unter oder gleich 30%, **dadurch gekennzeichnet, daß** man eine Doppelemulsion nach einem der Ansprüche 1 bis 9 einer gesteuerten Scherung so unterzieht, daß ein und derselbe maximale Schergrad auf die gesamte Emulsion ausgeübt wird.

**11.** Verfahren nach Anspruch 10, **dadurch gekennzeichnet, daß** die gesteuerte Scherung durch In-Kontakt-Bringen der Doppelemulsion mit einer sich bewegenden festen Oberfläche vorgenommen wird, wobei der die Strömung der Emulsion kennzeichnende Geschwindigkeitsgradient in einer zu dieser sich bewegenden festen Oberfläche senkrechten Richtung konstant ist.

**12.** Verfahren nach einem der Ansprüche 10 bis 11, **dadurch gekennzeichnet, daß** der maximale Wert des Schergrads 1 bis $1.10^5$ s$^{-1}$, vorzugsweise 100 bis 5000 s$^{-1}$, beträgt.

**13.** Verfahren nach einem der Ansprüche 10 bis 12, **dadurch gekennzeichnet, daß** die Scherung durch homogene Strömung der Doppelemulsion in einer Zelle ausgeübt wird, die aus zwei konzentrischen, sich in Bezug aufeinander drehenden Zylindern besteht.

**14.** Verfahren nach einem der Ansprüche 10 bis 12, **dadurch gekennzeichnet, daß** die Scherung durch homogene Strömung der Doppemulsion in einer Zelle ausgeübt wird, die aus zwei parallelen, sich in Bezug aufeinander hin- und herbewegenden Platten besteht.

15. Verfahren nach einem der Ansprüche 10 bis 12, **dadurch gekennzeichnet, daß** die Scherung durch homogene Strömung der Doppelemulsion in einer Zelle ausgeübt wird, die aus zwei konzentrischen, sich in Bezug aufeinander drehenden Scheiben besteht.

16. Stabile Doppelemulsion mit einer Polydispersität unter oder gleich 30% vom Typ Wasser-in-Öl-in-Wasser, bestehend aus 50 bis 95 Gew.-%, bezogen auf das Gesamtgewicht der Doppelemulsion, Tröpchen einer monodispersen Umkehremulsion Ei, die in einer kontinuierlichen wässrigen Phase dispergiert ist,

- wobei die monodisperse Umkehremulsion Ei eine Polydispersität unter oder gleich 30% aufweist;
- wobei die kontinuierliche wässrige Phase ein Polysaccharid-Verdickungsmittel in einer Menge von 1 bis 10 Gew.-%, bezogen auf das Gesamtgewicht der kontinuierlichen wässrigen Phase; ein wasserlösliches Block-Copolymer aus Ethylenoxid und Propylenoxid als Netzmittel; und ein Mittel zum Ausgleich des osmotischen Drucks enthält;
- wobei die Emulsion Ei eine Viskosität unter oder gleich der Viskosität der kontinuierlichen wässrigen Phase aufweist und aus 50 bis 95 Gew.-%, bezogen auf das Gesamtgewicht von Ei, Tröpfchen einer inneren wässrigen Phase besteht, die in einer öligen Phase dispergiert sind;
- wobei die innere wässrige Phase mindestens eine hydrophile aktive Substanz enthält;
- wobei die ölige Phase Polyglycerinpolyricinoleat als Netzmittel enthält.

17. Emulsion nach Anspruch 16, **dadurch gekennzeichnet, daß** der mittlere Durchmesser der Tröpfchen von Emulsion Ei 1 bis 10 μm beträgt.

18. Emulsion nach Anspruch 16 oder 17, bei der die hydrophile aktive Substanz aus Vitamin E, Vitamin C, Enzymen, antalgischen Mitteln, antimitotischen Mitteln, entzündungshemmenden Mitteln oder Antiglaukommitteln, Impfstoffen, Antikrebsmitteln, narkotischen Antagonismen, Entgiftungsmitteln, Enthaarungsmitteln, Korrekturmitteln, wasserlöslichen Salzen, Säuren, Basen, Essig, Glucose, Farbstoffen, Konservierungsmitteln oder ihren Mischungen ausgewählt ist.

**Claims**

1. Fractionable stable double emulsion having a polydispersity greater than 30%, of the water-in-oil-in-water type, consisting of 50 to 95% by weight, relative to the total weight of the double emulsion, of droplets of an invert monodisperse emulsion Ei dispersed in a continuous aqueous phase; the invert monodisperse emulsion Ei having a polydispersity less than or equal to 30%;

- the continuous aqueous phase comprising a polysaccharide thickening agent in a proportion of 1 to 10% by weight relative to the total weight of the continuous aqueous phase; a water-soluble block copolymer of ethylene oxide and propylene oxide as surfactant; and an osmotic pressure balancing agent;

- the emulsion Ei having a viscosity lower than or equal to the viscosity of the continuous aqueous phase and consisting of 50 to 95% by weight, relative to the total weight of Ei, of droplets of an internal aqueous phase dispersed in an oily phase;

- the internal aqueous phase comprising at least one active hydrophilic substance;

- the oily phase comprising polyglycerol polyricinoleate as surfactant; the concentration of balancing agent being sufficient in order to ensure the osmotic balance between the aqueous phase of the emulsion Ei and the continuous aqueous phase.

2. Double emulsion as claimed in Claim 1, **characterised in that** it comprises at least 60% by weight of droplets of the emulsion Ei relative to the total weight of the double emulsion.

3. Double emulsion as claimed in any one of the preceding claims, **characterised in that** the osmotic pressure balancing agent is glucose.

4. Double emulsion as claimed in any one of the preceding claims, **characterised in that** the polysaccharide thickening agent is an alginate, preferably an alginate having a molar mass of between 3000 and 6000 g/mol.

5. Double emulsion as claimed in any one of the preceding claims, **characterised in that** the block polymer has the formula:

$$H\text{-}(OCH_2CH_2)_a\text{-}(O\text{-}CH(CH_3)\text{-}CH_2)_b\text{-}(OCH_2CH_2)_a\text{-}OH \qquad (I)$$

in which
a is an integer between 50 and 120; and
b is an integer between 20 and 100.

6. Double emulsion as claimed in Claim 5, **characterised in that** the continuous aqueous phase comprises from 1 to 5% by weight, relative to the total weight of the continuous aqueous phase, of alginate, preferably of an alginate having a molar mass of between 3000 and 6000 g/mole as thickener; and from 3 to 10% by weight, relative to the total weight of the continuous aqueous phase, of the block polymer of formula (1) as defined in Claim 5 as surfactant.

7. Double emulsion as claimed in any one of the preceding claims, **characterised in that** the continuous aqueous phase comprises glucose as osmotic pressure balancing agent, the molar ratio of the concentration of glucose in the continuous aqueous phase to the concentration of active substance in the internal aqueous phase being between 1.5 and 2.5.

8. Double emulsion as claimed in any one of the preceding claims, **characterised in that** the oily phase comprises from 60 to 90% by weight of polyglycerol polyricinoleate and from 1 to 40% by weight of dodecane.

9. Double emulsion as claimed in any one of the preceding claims, **characterised in that** Ei comprises at least 60% by weight of droplets of internal aqueous phase.

10. Method of preparation of a stable double emulsion of the water-in-oil-in-water type having a polydispersity lower than or equal to 30%, **characterised in that** a double emulsion as claimed in any one of Claims 1 to 9 is subjected to a controlled shear such that one and the same maximum shear rate is applied to the whole of the emulsion.

11. Method as claimed in Claim 10, **characterised in that** the controlled shear is produced by placing the said double emulsion in contact with a solid surface in motion, the speed gradient **characterising** the flow of the emulsion being constant in a direction perpendicular to the said solid surface in motion.

12. Method as claimed in any one of Claims 10 to 11, **characterised in that** the maximum value of the shear rate is from 1 to $1.10^5$ s$^{-1}$, preferably from 100 to 5000 s$^{-1}$.

13. Method as claimed in any one of Claims 10 to 12, **characterised in that** the shear is applied by homogeneous flow of the double emulsion in a cell consisting of two concentric cylinders in rotation relative to one another.

14. Method as claimed in any one of Claims 10 to 12, **characterised in that** the shear is applied by homogeneous flow of the double emulsion in a cell consisting of two parallel plates in oscillating motion relative to one another.

15. Method as claimed in any one of Claims 10 to 12, **characterised in that** the shear is applied by homogeneous flow of the double emulsion in a cell consisting of two concentric discs in rotation relative to one another.

16. Stable double emulsion having a polydispersity less than or equal to 30%, of the water-in-oil-in-water type, consisting of 50 to 95% by weight, relative to the total weight of the double emulsion, of droplets of an invert monodisperse emulsion Ei dispersed in a continuous aqueous phase;

- the invert monodisperse emulsion Ei having a polydispersity less than or equal to 30%;

- the continuous aqueous phase comprising a polysaccharide thickening agent in a proportion of 1 to 10% by weight relative to the total weight of the continuous aqueous phase; a water-soluble block copolymer of ethylene oxide and propylene oxide as surfactant; and an osmotic pressure balancing agent;

- the emulsion Ei having a viscosity lower than or equal to the viscosity of the continuous aqueous phase and consisting of 50 to 95% by weight, relative to the total weight of Ei, of droplets of an internal aqueous phase dispersed in an oily phase;

- the internal aqueous phase comprising at least one active hydrophilic substance;

- the oily phase comprising polyglycerol polyricinoleate as surfactant.

17. Emulsion as claimed in Claim 16, **characterised in that** the average diameter of the droplets of emulsion Ei is between 1 and 10 μm.

18. Emulsion as claimed in Claim 16 or 17, in which the active hydrophilic substance is chosen from amongst vitamin E, vitamin C, enzymes, analgesic agents, antinitotic agents, anti-inflammatory agents or antiglaumatous agents, vaccines, narconic antagonism anticancer agents, detoxication agents, desilatory agents, correcting agents, water-soluble salts, acids, glucose vinegar bases, colourings, preservatives or mixtures thereof.

FIG.1

FIG.2

FIG.3

FIG.4

FIG.5